# EUROPÄISCHE PATENTSCHRIFT

(11) **EP 0 375 872 B1**
(45) Veröffentlichungstag und Bekanntmachung des Hinweises auf die Patenterteilung: **12.01.1994**
(21) Anmeldenummer: 89119586.9
(22) Anmeldetag: 21.10.1989
(51) Int. Cl.: F42C 13/06, G01V 1/00

(54) **Auf Kettenfahrzeuge ansprechende Weckvorrichtung**
Fuze triggered by a tracked vehicle
Fusée déclenchée par véhicule chenillé

(30) Priorität: 02.12.1988 DE 3840732
(43) Veröffentlichungstag der Anmeldung: 04.07.1990
(73) Patentinhaber: ATLAS ELEKTRONIK GMBH, D-28305 Bremen (DE)
(72) Erfinder: Becker, Gunnar R., Dipl.-Geophys., D-2800 Bremen (DE); Güdesen, Alwin, Dr. Ing., D-2819 Morsum (DE); Klemp, Jürgen, Dipl.-Ing., D-2810 Verden (DE); Tummoschet, Günter, D-2806 Oyten (DE)
(74) Vertreter: Schulz, Klaus, Patentassessor, Dipl.-Ing.

(56) Entgegenhaltungen:
- EP-A- 0 209 782
- US-A- 3 509 791
- US-A- 3 691 549
- US-A- 4 408 533

## Beschreibung

Die Erfindung betrifft eine Weckvorrichtung, die auf von Kettenfahrzeugen hervorgerufene Fahrzeuggeräusche anspricht und ein die Anwesenheit solcher Fahrzeuge anzeigendes elektrisches Signal (Wecksignal) erzeugt, der im Oberbegriff des Anspruchs 1 definierten Gattung.

Zur Überwachung und Sicherung von Aufmarschgebieten und Wegstrecken, die für feindliche Panzerangriffe geeignet sind, bieten sich stationäre, panzerbrechende Landminen an. Mit technisch hochwertigen Landminen können dabei vorbeifahrende Panzer von oben bekämpft werden. Diese müssen hierzu angetrieben und eigengelenkte Geschosse mit panzerbrechenden Sprengladungen aufweisen. Einfachere Landminen bekämpfen einen Panzer von der Seite und sind an einer Fahrstraße so installiert, daß sie mit einem eigenen Sensor einen Wegabschnitt überwachen. Sobald ein Panzer in diesen Wegabschnitt eindringt, wird die Mine gezündet und das Geschoß abgefeuert. Solche Landminen erfordern Weckvorrichtungen, welche die Landminen dann aktivieren, wenn zu bekämpfende Ziele in Kampfreichweite der Landmine gelangen. Um dabei die Effizienz der Panzerbekämpfung zu gewährleisten, müssen die Weckvorrichtungen in der Lage sein, Kettenfahrzeuge mit möglichst niedriger Falschalarmrate zu detektieren. Da meist jeder Landmine eine Weckvorrichtung zugeordnet wird, müssen letztere zu niedrigen Gestehungskosten herstellbar sein, damit der erforderliche große Bedarf mit vernünftigem finanziellen Aufwand gedeckt werden kann.

Bei einer bekannten Weckvorrichtung der eingangs genannten Art (EP 0209 782 A2) wird das Wecksignal dazu verwendet, das Zünden von stationären Landminen zu verhindern, um die zur Bekämpfung von schweren gepanzerten Kettenfahrzeugen ungeeigneten Landminen nicht sinnlos abzuschießen. Bei dieser Weckvorrichtung ist der Schwellwert am zweiten Eingang des Komparators von einem zweiten Tiefpaß abgenommen, der an dem Gleichrichter angeschlossen ist und gegenüber dem ersten Tiefpaß eine doppelt so große Zeitkonstante hat. Der Komparator ist so eingestellt, daß bei Abwesenheit von Fahrzeuggeräuschen der Schwellwert immer höher ist als der Pegel an dem anderen Komparatoreingang. Nähert sich ein Fahrzeug, so steigt der vom ersten Tiefpaß an den Komparator gelegte Pegel sehr viel schneller an, als der vom zweiten Tiefpaß an den Komparator gelegte Schwellwert, und sobald letzterer überstiegen wird, gibt der Komparator ein Ausgangssignal ab.

Zur Erkennung von Schwerfahrzeugen ist dem Signalverarbeitungskanal, bestehend aus Gleichrichter, zwei Tiefpässen und einem Komparator, ein Bandpaß für höhere Frequenzen (20 bis 150 Hz) vorgeschaltet und ein identischer zweiter Signalverarbeitungskanal vorgesehen, dem ein zweiter Bandpaß mit niedrigerem Frequenzbereich (1,5 bis 8,5 Hz) vorgeschaltet ist. Mittels einer Verknüpfungslogik werden die, wie vorstehend beschrieben, erzeugten Ausgangssignale der beiden Komparatoren in den beiden Signalverarbeitungskanälen miteinander logisch verknüpft. Ein Wecksignal wird in Folge der Verknüpfung dann erzeugt, wenn das Ausgangssignal des Komparators im zweiten Signalverarbeitungskanal früher auftritt als das Ausgangssignal des Komparators im ersten Signalverarbeitungskanal.

Diese bekannte Weckvorrichtung erfordert mit ihren zwei Signalverarbeitungskanälen und der Verknüpfungslogik einen sehr hohen schaltungstechnischen Aufwand und dadurch bedingte recht hohe Fertigungskosten. Die eingangs gestellte Forderung nach niedrigen Herstellungskosten, die für den Einsatz der Weckvorrichtung als Massenartikel unabdingbar ist, kann die bekannte Weckvorrichtung damit nicht erfüllen.

Aus der US-A-4408533 ist eine Vorrichtung bekannt, die eine Waffe zur Bekämpfung von Flugzielen aktiviert und hierzu die Zeit und die Distanz der größten Annäherung des Flugziels vorausbestimmt und an die Waffe gibt. Hierzu weist die Vorrichtung einen akustischen Sensor zur Erfassung der von dem Flugziel erzeugten Schallwellen als Funktion der Amplitude über der Zeit, einen Differenzierer zur Bildung der 1. Ableitung dieser Funktion, einen Verstärker zur Multiplikation der 1. Ableitung mit einem Faktor K, einen Differenzbildner zur Bildung der Differenz aus der Funktion und ihrer um den Faktor K vergrößerten Ableitung und einen Komparator zum Vergleich der Differenz mit einem Schwellwert auf. Wird der Schwellwert überschritten, so wird ein Waffenaktivierungssignal erzeugt.

Der Erfindung liegt die Aufgabe zugrunde, eine Weckvorrichtung der eingangs genannten Art zu schaffen, die bei Sicherstellung einer ausreichend niedrigen Falschalarmrate sehr einfach aufgebaut und damit kostengünstig als Massenartikel herstellbar ist.

Die Aufgabe ist bei einer Weckvorrichtung der im Oberbegriff des Anspruchs 1 definierten Gattung erfindungsgemäß durch die Merkmale im Kennzeichenteil des Anspruchs 1 gelöst.

Die erfindungsgemäße Weckvorrichtung erfaßt mittels des Geophons die von einem Fahrzeug ausgelösten, in den Boden eingekoppelten Geräusche, wobei eine Unterscheidung von Rad- und Kettenfahrzeugen mittels eines Schwellenkriteriums getroffen wird, mit dem der Empfangspegel des Geophons, also der Pegel des gleichgerichteten und ggf. verstärkten Geophonausgangssignals, verglichen wird. Wird der Schwellwert überschritten, so ist ein Kettenfahrzeug erkannt, und das Wecksignal liegt unmittelbar am Ausgang des Komparators vor, ohne daß weitere Verknüpfungen zur Gewinnung des Wecksignals erforderlich wären. Dadurch ist die erforderliche Signalverarbeitung zur Gewinnung des das Kettenfahrzeug indizierenden Wecksignals extrem reduziert. Die erforderlichen Bauelemente sind zahlenmäßig ungleich geringer als bei der bekannten Weckvorrichtung. Die Falschalarmrate wird dadurch gering gehalten, daß zunächst der vorgegebene Schwellwert üblicherweise nur von Kettenfahrzeugen aber nicht von Radfahrzeugen überschritten werden kann. Des weiteren ist der Schwellwert an die am Ausbringungsort herrschende Bodenbeschaffenheit und/oder herrschenden Hintergrundgeräusche adaptiert, die sich verfälschend auf den von den Fahrzeugen erzeugten Empfangspegel am Geophon auswirken, wodurch der Schwellwert mehr oder weniger angehoben oder abgesenkt wird. Dadurch wird beispielsweise verhindert, daß der Pegel eines empfangenen, von einem Radfahrzeug auf felsigem Untergrund herrührenden Geräusches den für Kettenfahrzeuge auf Basis einer sandigen Bodenbeschaffenheit erforderlichen Schwellwert übersteigt.

Vorteilhafte Ausführungsformen der erfindungsgemäßen Weckvorrichtung mit vorteilhaften Ausgestaltungen und Weiterbildungen der Erfindung sind in den weiteren Ansprüchen angegeben.

Die Falschalarmrate kann noch weiter gesenkt werden, wenn gemäß einer bevorzugten Ausführungsform der Erfindung dem Gleichrichter ein auf das Frequenzband von Kettenfahrzeugen abgestimmter Bandpaß vorgeschaltet wird. Dadurch werden Geräusche eliminiert, deren Frequenzen außerhalb des Frequenzbereiches von Kettenfahrzeugen liegen, auch wenn diese einen Empfangspegel am Geophon hervorrufen, der größer ist als der von Radfahrzeugen.

In einer einfachen Version der Weckvorrichtung wird der Schwellwert aufgrund der festgestellten oder - bei evtl. Verschießen der Weckvorrichtung mit der Landmine - erwarteten Bodenbeschaffenheit von Hand eingestellt.

In einer technisch höherwertigen Version der Weckvorrichtung ist eine Schwellenlogik vorgesehen, die aufgrund bestimmter Kriterien (Bodenbeschaffenheit und/oder Hintergrundgeräusche) am Ausbringungsort des Geophons nach Geophonausbringung den Schwellwert automatisch einstellt.

Hierzu wird in einer ersten Ausführungsform der Erfindung das Hintergrundgeräusch in der Umgebung des ausgebrachten Geophons ausgenutzt. Die Schwellenlogik weist einen Tiefpaß mit einer sehr niedrigen Grenzfrequenz auf, dem das Ausgangssignal des Geophons nach Gleichrichtung und Tiefpaßfilterung zugeführt wird. Durch den Tiefpaß der Schwellenlogik wird jegliches Nutzsignal unterdrückt und nur extrem langsam sich ändernde akustische Signale (Hintergrundrauschen) erfaßt. Der Pegel des Ausgangssignals des Tiefpasses wird um einen konstanten Betrag erhöht und als Schwellwert am Komparator eingestellt. Der auf Erfahrungswerte beruhende konstante Betrag ist abhängig von der Detektionsentfernung und berücksichtigt den unterschiedlichen Pegel von Rad- und Kettenfahrzeugen bei gleicher Bodenbeschaffenheit. Eine solche Weckvorrichtung wird daher bevorzugt zur Überwachung von festen Fahrstraßen oder vorgegebenen Fahrwegen eingesetzt, wo die Entfernung zwischen dem Geophon und ggf. zu detektierenden Fahrzeugen im wesentlichen konstant ist.

In einer zweiten Ausführungsform der Erfindung wird die Bodenbeschaffenheit aufgrund der seismischen Ausbreitungsgeschwindigkeit erkannt, die bei unterschiedlichen Bodenarten, z.B. bei Sand und Fels, deutlich unterschiedlich ist. Die Schwellenlogik weist hier zwei im bekannten Abstand voneinander angeordnete Geophone und eine Signalverarbeitungseinheit auf, welche die Zeitverzögerung der beiden Geophonausgangssignale, z.B. durch Bildung der Kreuzkorrelationsfunktion bestimmt. Aus dem Zeitversatz und dem bekannten Abstand zwischen den Geophonen wird die seismische Ausbreitungsgeschwindigkeit als Maß für die Bodenbeschaffenheit berechnet. Der Schwellwert wird nunmehr proportional dem Kehrwert des Quadrates der berechneten seismischen Ausbreitungsgeschwindigkeit eingestellt.

Die erfindungsgemäße Weckvorrichtung wird vorteilhaft in einer Landmine integriert, wobei ihr Geophon in der Mine selbst oder in Nähe der Mine mit Bodenkontakt angeordnet ist. Dabei kann das Geophon an der Unterseite der Mine angeordnet sein, mit welchem die Mine auf dem Boden aufliegt. Das Geophon kann aber auch nach Aufsetzen der Mine auf dem Boden, z.B. nach Verschießen der Landmine, mittels einer Sprengladung von der Unterseite der Mine in die Oberfläche des Bodens eingeschossen werden. Besitzt die Landmine mindestens drei Ausleger zur schußgerechten Positionierung auf der Erdoberfläche, so kann auch in jedem Ausleger ein Geophon integriert werden. Mit Hilfe der Ausgangssignale der drei Geophone kann zusätzliche eine Peilung der ggf. zu bekämpfenden Geräuschquelle gewonnen werden.

Die erfindungsgemäße Weckvorrichtung kann aber auch unabhängig von Landminen als Aufklärungsmittel eingesetzt werden und lediglich die Anwesenheit von Kettenfahrzeugen signalisieren.

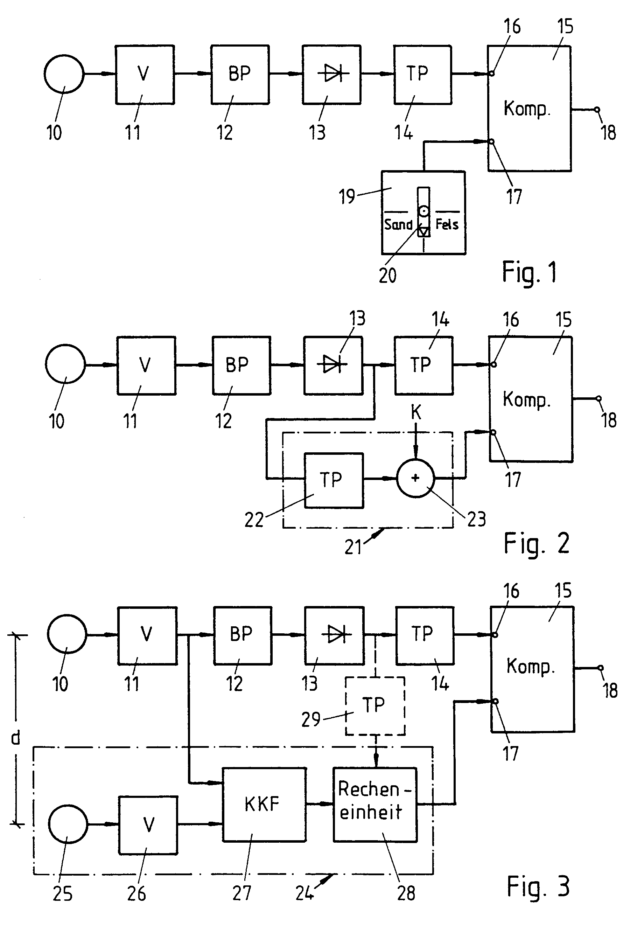

Die Erfindung ist anhand von in der Zeichnung dargestellten Ausführungsbeispielen im folgenden näher beschrieben. Dabei zeigen
- Fig. 1 bis 3: jeweils ein Blockschaltbild einer Weckvorrichtung gemäß dreier Ausführungsbeispiele.

Die in Fig. 1 im Blockschaltbild dargestellte Weckvorrichtung zum Aktivieren einer panzerbrechenden stationären Landmine, ist in der Mine selbst integriert und wird mit dieser in Aufmarschgebieten von Panzerverbänden oder an Wegstrecken, die für evtl. feindliche Panzerangriffe prädestiniert sind, zur Überwachung und Sicherung ausgebracht, beispielsweise durch Auslegen oder Verschießen. Die Weckvorrichtung weist ein Geophon 10 auf, das mit Bodenkontakt aufgestellt wird und Fahrzeuggeräusche empfängt, die von Fahrzeugen erzeugt, in den Boden eingekoppelt und von diesem zu dem Geophon 10 übertragen werden. Wie nicht im einzelnen dargestellt ist, kann hierzu das Geophon 10 an der Unterseite der Landmine angeordnet werden. Mit dieser Unterseite liegt die Landmine auf dem Boden auf. Bei einer technisch höherwertigen Weckvorrichtung, die insbesondere für Landminen vorgesehen ist, die durch Verschießen ausgebracht werden, kann das Geophon 10 mittels einer Sprengladung aus der Mine in den Untergrund eingeschossen oder mechanisch eingedrückt werden. Dadurch wird der Ankopplungsgrad des Geophons 10 an den Erdboden verbessert.

Am Ausgang des Geophons 10 ist eine Reihenschaltung aus einem Verstärker 11, einem Bandpaß 12, einem Gleichrichter 13 und einem Tiefpaß 14 angeschlossen. Der Ausgang des Tiefpasses 14 ist an einem Eingang 16 eines Komparators 15 angeschlossen, dessen Schwellwerteingang 17 mit einem Schwellwerteinsteller 19 verbunden ist. Der Bandpaß 12 ist auf das Frequenzband von Kettenfahrzeugen abgestimmt, in dessen Frequenzbereich allerdings auch von anderen Fahrzeugen, z.B. Radfahrzeugen, abgestrahlte seismische Frequenzen liegen. Zur Unterscheidung von Rad- und Kettenfahrzeugen wird im Komparator 15 der Pegel des am Ausgang des Tiefpasses 14 abgenommenen Signals mit dem am Schwellwerteingang 17 anstehenden Schwellwert verglichen. Wird dieser überschritten, so generiert der Komparator 15 ein sog. Wecksignal, das am Ausgang 18 des Komparators 15 ansteht und entsprechenden Komponenten in der Landmine zu deren Aktivierung zugeführt wird. Da der am Eingang 16 des Komparators 15 anstehende absolute Pegel eines empfangenen Geräusches von Umgebungsbedingungen, insbesondere von der Bodenbeschaffenheit in der Umgebung des Geophons 10, abhängig ist, wird vor Ausbringen der Weckvorrichtung dieser Schwellwert entsprechend der Bodenbeschaffenheit des Ausbringortes vorgegeben. Hierzu dient der Schwellwerteinsteller 19, in welchem durch Betätigen eines Wahlschalters 20 verschiedene an die Bodenbeschaffenheit angepaßte Schwellwerte eingestellt werden können. Beispielsweise wird für Sand ein höherer Schwellwert eingestellt als für Fels. Dadurch wird verhindert, daß z.B. der Pegel eines empfangenen, von einem Radfahrzeug auf felsigem Untergrund herrührenden Geräusches den für Kettenfahrzeuge auf Basis einer sandigen Bodenbeschaffenheit erforderlichen Schwellwert übersteigt.

Bei dem in Fig. 2 dargestellten weiteren Ausführungsbeispiel einer Weckvorrichtung wird die Adaption des Schwellwertes an die Umgebungsbedingungen mittels einer Schwellenlogik 21 selbsttätig durchgeführt. Bei der ansonsten unveränderten Schaltungsanordnung der Weckvorrichtung weist die Schwellenlogik 21 einen Tiefpaß 22 mit einer sehr niedrigen Grenzfrequenz auf, der an den Ausgang des Gleichrichters 13 parallel zu dem Tiefpaß 14 angeschlossen ist. Diese Grenzfrequenz ist etwa um den Faktor 10⁻³ niedriger als die Grenzfrequenz des Tiefpasses 14. Durch diesen Tiefpaß 22 wird jegliches Nutzsignal eliminiert und nur Signale von extrem langsam sich verändernden Vorgängen zugelassen. Damit steht am Ausgang des Tiefpasses 22 lediglich der Signalpegel eines über das Geophon 10 empfangenen Hintergrundgeräusches an. Dieser Pegel wird um einen Betrag K vergrößert, was mittels eines Addierers 23 oder eines Verstärkers erfolgen kann, und an den Schwellwerteingang 17 des Komparators 15 gelegt. Dieser Betrag K ist empirisch ermittelt und hängt ab von der Distanz zwischen einer panzerbefahrenen Fahrstraße und dem die Fahrstraße überwachenden Geophon 10 und berücksichtigt den unterschiedlichen Signalpegel von Rad- und Kettenfahrzeugen bei gleicher Bodenbeschaffenheit. Der Betrag K wird vor oder nach Ausbringen der Weckvorrichtung mittels eines Einstellers - ähnlich wie in Fig. 1 - , der für unterschiedliche Bodenstrukturen (z. B. Sand, Fels) unterschiedliche Werte für den Betrag K liefert, manuell vorgegeben.

Bei der in dem weiteren Ausführungsbeispiel einer Weckvorrichtung gemäß Fig. 3 enthaltenen Schwellenlogik 24 erfolgt die Adaption der Schwelle des Komparators 15 an die Bodenbeschaffenheit automatisch, und zwar dadurch, daß die seismische Ausbreitungsgeschwindigkeit in der Umgebung des Geophons 10 gemessen und diese als Maß für die Einstellung des Schwellwertes im Komparator 15 herangezogen wird. Hierzu sind insgesamt zwei Geophone in bekanntem Abstand voneinander angeordnet. Eines dieser Geophone wird von dem Geophon 10 gebildet, das andere von einem zusätzlich ausgebrachten Geophon 25, im folgenden Zusatzgeophon 25 genannt. Das Zusatzgeophon 25 und ein diesem nachgeschalteter Verstärker 26 sind Teil der Schwellenlogik 24, die sich zusätzlich des verstärkten Ausgangssignals des Geophons 10 bedient. Weiterer Bestandteil der Schwellenlogik 24 ist ein Korrelator 27, der die Kreuzkorrelationsfunktion der beiden verstärkten Ausgangssignale von Geophon 10 und Zusatzgeophon 25 bildet, und einer Recheneinheit 28. Der Korrelator 27 liefert an die Recheneinheit 28 die durch den räumlichen Abstand der Geophone 10, 25 bedingte zeitliche Verschiebung zwischen den beiden Ausgangssignalen von Geophon 10 und Zusatzgeophon 25. Diese berechnet daraus und aus dem bekannten Abstand d zwischen Geophon 10 und Zusatzgeophon 25 die seismische Ausbreitungsgeschwindigkeit im Boden. Anschließend wird der Kehrwert des Quadrats der berechneten Ausbreitungsgeschwindigkeit berechnet, der - ggf. nach Multiplikation oder Addition mit einem Faktor - als Schwellwert an den Schwellwerteingang 17 des Komparators 15 gelegt wird.

Dieser Faktor kann gemäß einem weiteren Ausführungsbeispiel der Weckvorrichtung in gleicher Weise, wie in Fig. 2 dargestellt, dadurch gewonnen werden, daß ein in Fig. 3 strichliniert eingezeichneter Tiefpaß 29 an dem Ausgang des Gleichrichters 13 angeschlossen ist. Der Tiefpaß 29 ist identisch dem Tiefpaß 22 in Fig. 2 ausgebildet, weist also eine Grenzfrequenz auf, die etwa um den Faktor 10⁻³ kleiner ist als die Grenzfrequenz des Tiefpasses 14. Damit steht am Ausgang des Tiefpasses 29 lediglich der Signalpegel eines über das Geophon 10 empfangenen Hintergrundgeräusches an. Dieser Pegel wird als Faktor der Recheneinheit 28 zugeführt, die den Kehrwert des Quadrats der berechneten seismischen Ausbreitungsgeschwindigkeit mit diesem Faktor multipliziert oder addiert. Die Schwelle des Komparators 15 ist damit automatisch in Abhängigkeit von der Bodenbeschaffenheit am Ausbringort der Weckvorrichtung und von den Umgebungsbedingungen (Hintergrundgeräusch, z. B. starker Regenfall) eingestellt.

Falls ein drittes Geophon vorgesehen wird, kann aus den Ausgangssignalen der drei Geophone zusätzliche eine Peilung zum detektierten Kettenfahrzeug gewonnen und zur Voreinstellung oder Korrektur der Schußrichtung der Landmine herangezogen werden.

## Patentansprüche

1. Weckvorrichtung, die auf von Kettenfahrzeugen hervorgerufene Fahrzeuggeräusche anspricht und ein die Anwesenheit solcher Fahrzeuge anzeigendes elektrisches Wecksignal erzeugt, mit einem Geophon (10) zum Empfangen von in den Boden eingekoppelten Fahrzeuggeräuschen, mit einer am Ausgang des Geophons (10) angeschlossenen Reihenschaltung aus Gleichrichter (13) und Tiefpaß (14) zum Ableiten eines Empfangspegels aus dem Empfangssignal des Geophons (10) und mit einem zwei Eingänge (16, 17) und einen Ausgang (18) aufweisenden Komparator (15), der den an seinem einen Eingang (16) anliegenden Empfangspegel mit einem an seinem anderen Eingang (17) anliegenden Schwellwert vergleicht und bei dessen Uberschreiten durch den Empfangspegel am Ausgang (18) des Komparators (15) ein Ausgangssignal erzeugt, dadurch gekennzeichnet, daß der Schwellwert größer als der von Radfahrzeugen und kleiner als der von Kettenfahrzeugen jeweils hervorgerufene Empfangspegel des Geophons (10) bemessen und zusätzlich so korrigiert ist, daß der Einfluß der am Ausbringungsort des Geophons (10) herrschenden Bodenbeschaffenheit und/oder Hintergrundgeräusche auf die von Rad- und Kettenfahrzeugen hervorgerufenen Empfangspegel des Geophons (10) wenigstens annähernd kompensiert ist, und daß das Ausgangssignal des Komparators (15) das Wecksignal selbst bildet.

2. Vorrichtung nach Anspruch 1, dadurch gekennzeichnet, daß am Schwellwerteingang (17) des Komparators (15) ein Schwellwerteinsteller (19) mit manuellem Wählschalter (20) angeschlossen ist, der je nach eingestellter Wählschalterposition einen an die ausgewählte Bodenbeschaffenheit adaptierten Schwellwert ausgibt.

3. Vorrichtung nach Anspruch 1, dadurch gekennzeichnet, daß am Schwellwerteingang (17) des Komparators (15) eine Schwellenlogik (21) angeschlossen ist, die einen am Ausgang des Gleichrichters (13) angeschlossenen zweiten Tiefpaß (22) mit gegenüber dem ersten Tiefpaß (14) wesentlich kleinerer Grenzfrequenz und einen Addierer (23) aufweist, der das Ausgangssignal des zweiten Tiefpasses (22) um einen voreingestellten, empirisch ermittelten Betrag vergrößert.

4. Vorrichtung nach Anspruch 1, dadurch gekennzeichnet, daß am Schwellwerteingang (17) des Komparators (15) der Ausgang einer Schwellenlogik (24) angeschlossen ist, die zwei im Abstand (d) voneinander angeordnete Geophone (10, 25) und eine an diese angeschlossene Signalverarbeitungseinheit (27, 28) aufweist, die die abstandsbedingte Zeitverschiebung zwischen den beiden Geophonausgangssignalen, zum Beispiel durch Bildung der Kreuzkorrelationsfunktion, bestimmt und daraus und dem bekannten Abstand (d) zwischen den Geophonen (10, 25) die seismische Ausbreitungsgeschwindigkeit und einen dem Kehrwert des Quadrats der seismischen Ausbreitungsgeschwindigkeit entsprechenden Wert berechnet, der unmittelbar oder mit einem Faktor multiplikativ oder additiv vergrößert am Ausgang der Schwellenlogik (24) ansteht.

5. Vorrichtung nach Anspruch 4, dadurch gekennzeichnet, daß der Faktor vom Ausgang eines am Ausgang des Gleichrichters (13) angeschlossenen zweiten Tiefpasses (29) mit gegenüber dem ersten Tiefpaß (14) wesentlich kleinerer Grundfrequenz abgenommen ist.

6. Vorrichtung nach Anspruch 3 oder 5, dadurch gekennzeichnet, daß die Grenzfrequenz des zweiten Tiefpasses (22; 29) um etwa den Faktor 10⁻³ kleiner ist als die des ersten Tiefpasses (14).

7. Vorrichtung nach einem der Ansprüche 4 bis 6, dadurch gekennzeichnet, daß mindestens eines der beiden Geophone (10, 25) der Schwellenlogik (24) das mindestens eine Geophon (10) zum Empfang der Fahrzeuggeräusche ist.

8. Vorrichtung nach einem der Ansprüche 1 bis 7, dadurch gekennzeichnet, daß dem ersten Gleichrichter (13) ein auf das Frequenzband von Kettenfahrzeugen abgestimmter Bandpaß (12) vorgeschaltet ist.

## Claims

1. Alarm device, which responds to noise produced by tracked vehicles and generates an electrical alarm signal indicating the presence of such vehicles, having a geophone (10) to receive vehicle noise signals coupled to the ground, having a series circuit connected to the output of said geophone (10) comprising a rectifier (13) and low-pass filter (14) to obtain an incoming signal level from the signal received by said geophone (10), and having a comparator (15) with two inputs (16, 17) and one output (18), which compares the incoming signal level at one of its inputs (16) to a threshold at its other input (17) and, if this is exceeded by the incoming signal level at the output (18) of said comparator (15), generates an output signal, characterised in that said threshold is higher than the incoming signal level from the geophone (10) produced by wheeled vehicles and lower than that produced by tracked vehicles and is additionally rectified, so that the influence of the ground characteristics where the geophone (10) is set up, and/or the background noise, on the level of incoming signals produced by wheeled and tracked vehicles received by said geophone (10) is compensated at least approximately, and that the output signal of said comparator (15) constitutes the alarm signal itself.

2. Device according to Claim 1, characterised in that a threshold adjustment means (19) with a manual selector switch (20) is connected to the threshold input (17) of the comparator (15), which outputs a threshold adapted to the selected ground characteristic, depending on the set position of the selector switch.

3. Device according to Claim 1, characterised in that a threshold logic (21) is connected to the threshold input (17) of the comparator (15), which has a second low-pass filter (22) connected to the output of the rectifier (13) with a limit frequency substantially lower than the first low-pass filter (14), and an adder (23), which increases the output signal of the second low-pass filter (22) by a pre-set, empirically determined amount.

4. Device according to Claim 1, characterised in that the output of a threshold logic (24) is connected to the threshold input (17) of the comparator (15), which has two geophones (10, 25) arranged at a distance (d) from one another and a signal processing unit (27, 28) connected thereto, which determines the time shift dependent on the distance between the two geophone output signals, for example, by formation of the cross-correlation function, and from that and from the known distance (d) between the geophones (10, 25), calculates the seismic propagation rate and a value corresponding to the reciprocal of the square of the seismic propagation rate, which, either directly or increased by a factor either by multiplication or addition, is present at the output of the threshold logic (24).

5. Device according to Claim 4, characterised in that the factor is taken by the output of a second low-pass filter (29) with a substantially lower limit frequency than the first low-pass filter (14), which is connected to the output of the rectifier (13).

6. Device according to Claim 3 or 5, characterised in that the limit frequency of the second low-pass filter (22; 29) is lower than that of the first low-pass filter (14) by about factor 10⁻³.

7. Device according to one of Claims 4 to 6, characterised in that at least one of the two geophones (10, 25) of the threshold logic (24) is the at least one geophone (10) for receiving vehicle noise signals.

8. Device according to one of Claims 1 to 7, characterised in that a band-pass filter (12) tuned to the frequency band of tracked vehicles is connected in series to the first rectifier (13).

## Revendications

1. Dispositif d'activation, qui répond à des bruits provoqués par des véhicules chenillés et produit un signal électrique d'activation qui indique la présence de tels véhicules, comportant un géophone (10) servant à recevoir des bruits de véhicules induits dans le sol, un circuit série raccordé à la sortie du géophone (10) et constitué par un redresseur (13) et un filtre passe-bas (14) pour produire un niveau de réception à partir du signal de réception du géophone (10), et un comparateur (15), qui comporte deux entrées (16,17) et une sortie (18) et qui compare le niveau de réception, appliqué à l'une (16) de ses entrées, à une valeur de seuil appliquée à son autre entrée (17) et produit un signal de sortie lors du dépassement de cette valeur de seuil par le niveau de réception, à la sortie (18) du comparateur (15), caractérisé en ce que la valeur de seuil est choisie supérieure au niveau de réception du géophone (10), produit par des véhicules sur roues, et inférieure au niveau de réception, produit par des véhicules chenillés et est en outre corrigée de telle sorte que l'influence des caractéristiques du sol et/ou des bruits de fond, qui règnent au point d'installation du géophone (10), sur le niveau de réception du géophone (10), produit par des véhicules sur roues et des véhicules chenillés, est au moins approximativement compensé, et que le signal de sortie du comparateur (15) forme le signal d'activation lui-même.

2. Dispositif selon la revendication 1, caractérisé en ce qu'à l'entrée (17) de la valeur de seuil du comparateur (15) est raccordé un dispositif (19) de réglage de la valeur de seuil, qui comporte un commutateur manuel de sélection (20), qui, en fonction de la position réglée du commutateur de sélection, délivre une valeur de seuil adaptée aux caractéristiques sélectionnées du sol.

3. Dispositif selon la revendication 1, caractérisé en ce qu'à l'entrée (17) de la valeur de seuil du comparateur (15) est raccordé un circuit logique à seuil (21), qui possède un second filtre passe-bas (22), qui est raccordé à la sortie du redresseur (13) et possède une fréquence nettement inférieure à celle du premier filtre passe-bas (14), et un additionneur (23), qui augmente, d'une valeur préréglée déterminée de façon empirique, le signal de sortie du second filtre passe-bas (22).

4. Dispositif selon la revendication 1, caractérisé par le fait qu'à l'entrée (17) de la valeur de seuil du comparateur (15) est raccordée la sortie d'un circuit logique à seuil (24), qui comporte deux géophones (10,25) situés à une distance réciproque (d) et une unité (27,28) de traitement des signaux, qui est raccordée à ces géophones et détermine le décalage temporel, conditionné par la distance, entre les deux signaux de sortie des géophones, par exemple par formation de la fonction de corrélation croisée, et calcule à partir de là et à partir de la distance (d) connue entre les géophones (10,25), la vitesse de propagation sismique et une valeur, qui correspond à l'inverse du carré de la vitesse de propagation sismique et est appliquée directement ou en étant accrue par multiplication ou addition d'un facteur, a la sortie du circuit logique à seuil (24).

5. Dispositif selon la revendication 4, caractérisé en ce que le facteur est prélevé sur la sortie d'un second filtre passe-bas (29), qui est raccordé à la sortie du redresseur (13) et possède une fréquence de base nettement inférieure à celle du premier filtre passe-bas (14).

6. Dispositif selon la revendication 3 ou 5, caractérisé en ce que la fréquence limite du second filtre passe-bas (22;29) est inférieure, environ du facteur 10⁻³, à celle du premier filtre passe-bas (14).

7. Dispositif selon l'une des revendications 4 à 6, caractérisé en ce qu'au moins l'un des deux géophones (10,25) du circuit logique à seuil (24) est le géophone (10) servant à recevoir les bruits de véhicules, prévu en au moins un exemplaire.

8. Dispositif selon l'une des revendications 1 à 7, caractérisé en ce qu'un filtre passe-bande (12) accordé sur la bande des fréquences de véhicules chenillés, est branché en amont du premier redresseur (13).
